# EUROPEAN PATENT APPLICATION

(11) **EP 4 455 837 A1**
(43) Date of publication of application: **30.10.2024**
(21) Application number: 23170744.9
(22) Date of filing: 28.04.2023
(51) Int. Cl.: G06F 3/01, G06F 3/041

(54) **INPUT DEVICE WITH HAPTIC EFFECTS**

(71) Applicant: Aito BV, 1043 EJ Amsterdam (NL)
(72) Inventor: Keski-Jaskari, Turo, 04370 Tuusula (FI)
(74) Representative: Papula Oy

(57) **Abstract**

According to an embodiment an input device comprises: a plurality of haptic elements comprising a plurality of haptic element groups; a touch surface mechanically coupled to the plurality of haptic elements; a plurality of driving circuits, wherein each driving circuit in the plurality of driving circuits is configured to drive a corresponding hap-tic element group in the plurality of haptic element groups for providing a haptic effect via the touch surface; and a control circuit electrically coupled to each haptic element in the plurality of haptic elements and to each driving circuit in the plurality of driving circuits and configured to: detect at least one object on the touch surface using the plurality of haptic elements; and provide a plurality of independent haptic effects using the plurality of driving circuits and the plurality of haptic element groups, wherein the plurality of independent haptic effects at least partially overlap in time.

## Description

### TECHNICAL FIELD

The present disclosure relates to a device, and more particularly to an input device.

### BACKGROUND

Haptic elements may be used to provide haptic effects for a user, to sense touch, or both. For example, a user may use an electronic computing device, such as a laptop computer, via a touch surface. Pressure applied by the user to the touch surface can be converted into electrical signals using Haptic elements and an appropriate electronic circuit can analyse the electronic signals in order to convert them into input commands.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide an input device. The foregoing and other objects are achieved by the features of the independent claims. Further implementation forms are apparent from the dependent claims, the description and the figures.

According to a first aspect, an input device comprises: a plurality of haptic elements comprising a plurality of haptic element groups; a touch surface mechanically coupled to the plurality of haptic elements; a plurality of driving circuits, wherein each driving circuit in the plurality of driving circuits is configured to drive a corresponding haptic element group in the plurality of haptic element groups for providing a haptic effect via the touch surface; and a control circuit electrically coupled to each haptic element in the plurality of haptic elements and to each driving circuit in the plurality of driving circuits and configured to: detect at least one object on the touch surface using the plurality of haptic elements; and provide a plurality of independent haptic effects using the plurality of driving circuits and the plurality of haptic element groups, wherein the plurality of independent haptic effects at least partially overlap in time. The input device, can for example, be able to provide the plurality of independent haptic effects using the plurality of haptic element groups.

In an implementation form of the first aspect, a first haptic element group in the plurality of haptic element groups is arranged into a first area of the touch surface and a second haptic element group in the plurality of haptic element groups is arranged into a second area of the touch surface. The input device, can for example, be able to provide the plurality of independent haptic effects to object on the first and second area.

In another implementation form of the first aspect, the at least one object on the touch surface comprises a plurality of objects and the plurality of independent haptic effects are configured to provide an independent haptic effect for each object in the plurality of objects. The input device, can for example, be able to provide the plurality of independent haptic effects for the plurality of objects.

In another implementation form of the first aspect, the plurality of independent haptic effects comprises at least one haptic effect for the at least one object on the touch surface and at least one audio effect provided via the plurality of haptic elements. The input device, can for example, be able to provide both haptic effects and audio effects.

In another implementation form of the first aspect, the plurality of independent haptic effects comprises at least two different haptic effects provided to one object of the at least one object on the touch surface. The input device, can for example, be able to provide the plurality of independent haptic effects to one object.

In another implementation form of the first aspect, the plurality haptic element groups comprises at least a first group comprising a first type of haptic elements and a second group comprising a second type of haptic elements. The input device, can for example, have enhanced capabilities with haptic elements optimized for different operating parameters.

In another implementation form of the first aspect, the touch surface comprises at least a trackpad area and at least one wrist rest area of a laptop computer. The input device, can for example, provide haptic effects via the at least a trackpad area and the at least one wrist rest area of the laptop computer.

In another implementation form of the first aspect, at least a first haptic element group in the plurality of haptic element groups is arranged at least to the trackpad area and at least a second haptic element group in the plurality of haptic element groups is arranged at least to the at least one wrist rest area. The input device, can for example, provide independent haptic effects via the at least a trackpad area and the at least one wrist rest area of the laptop computer.

In another implementation form of the first aspect, the control circuit is further configured to perform self-diagnosis by performing: driving a first haptic element in the plurality of haptic elements using at least one driving circuit in the plurality of driving circuits; and detecting a response signal, caused by the driving the first haptic element, using a second haptic element in the plurality of haptic elements. The input device, can for example, be able to perform self-diagnosis.

In another implementation form of the first aspect, the plurality of haptic elements comprises a plurality of piezoelectric elements. The input device, can for example, efficiently provide the independent haptic effects via the plurality of piezoelectric elements.

According to a second aspect, laptop computer comprises the input device according to the first aspect.

According to third aspect, method for providing haptic effects with an input device comprising a plurality of haptic elements comprising a plurality of haptic element groups, a touch surface mechanically coupled to the plurality of haptic elements, and a plurality of driving circuits, wherein each driving circuit in the plurality of driving circuits is configured to drive a corresponding haptic element group in the plurality of haptic element groups for providing a haptic effect via the touch surface, comprises: detecting at least one object on the touch surface using the plurality of haptic elements; and providing a plurality of independent haptic effects using the plurality of driving circuits and the plurality of haptic element groups, wherein the plurality of independent haptic effects at least partially overlap in time.

According to a fourth aspect, a computer program product comprises program code configured to perform the method according the third aspect when the computer program product is executed on a computer.

Many of the attendant features will be more readily appreciated as they become better understood by reference to the following detailed description considered in connection with the accompanying drawings.

### DESCRIPTION OF THE DRAWINGS

In the following, example embodiments are described in more detail with reference to the attached figures and drawings, in which:
Fig. 1 illustrates a schematic representation of an input device according to an embodiment;
Fig. 2 illustrates a schematic representation of object on a touch surface of the input device according to an embodiment;
Fig. 3 illustrates a schematic representation of a haptic element assembly according to an embodiment;
Fig. 4 illustrates a schematic representation of a haptic element assembly according to another embodiment;
Fig. 5 illustrates a plot representation of driving signals according to an embodiment;
Fig. 6 illustrates a flow chart representation of a method according to an embodiment; and
Fig. 7 illustrates a schematic representation of a laptop computer according to an embodiment.

In the following, like reference numerals are used to designate like parts in the accompanying drawings.

### DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

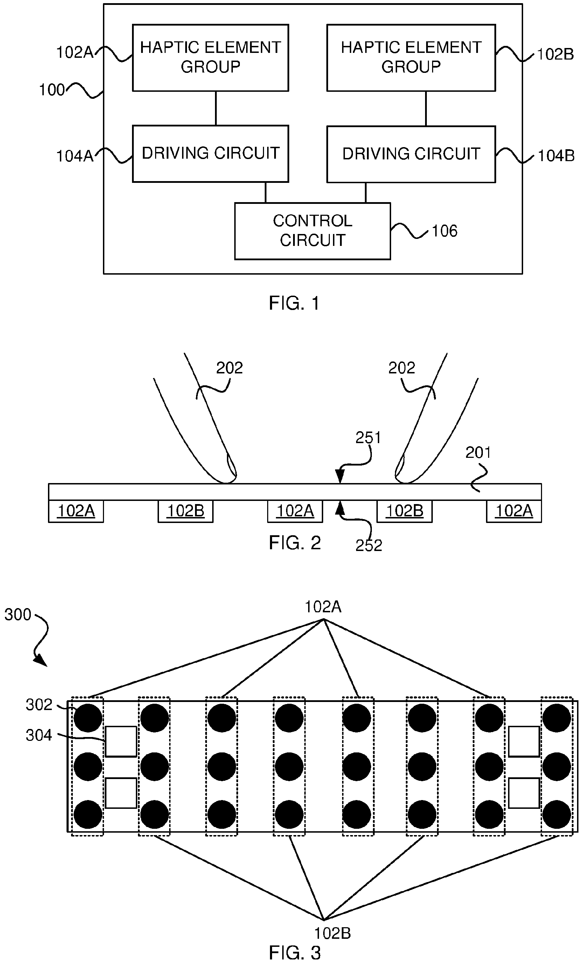

Fig. 1 illustrates a schematic representation of an input device according to an embodiment.

According to an embodiment, an input device 100 comprises a plurality of haptic elements comprising a plurality of haptic element groups.

For example, in the embodiment of Fig. 1, the input device 100 comprises a first haptic element group 102A and a second haptic element group 102B. In other embodiments, the plurality of haptic element groups may comprise any number of haptic element groups.

A haptic element may also be referred to as a haptic transducer, a haptic actuator, or similar.

The input device 100 may further comprise a touch surface mechanically coupled to the plurality of haptic elements.

The input device 100 may further comprise a plurality of driving circuits, wherein each driving circuit in the plurality of driving circuits is configured to drive a corresponding haptic element group in the plurality of haptic element groups for providing a haptic effect via the touch surface.

For example, in the embodiment of Fig. 1, the input device 100 comprises a first driving circuit 104A and a second driving circuit 104B. In other embodiments, the plurality of driving circuits may comprise any number of driving circuits.

Herein, a driving circuit 104A, 104B may also be referred to as a boost converter, a step-up converter, a boost converter circuit, a booster circuit, or similar.

In some embodiments, each control circuit in the plurality of control circuits may comprise an analogue front end (AFE), a booster circuit and/or an application specific integrated circuit (ASIC). The booster circuit/ASIC may also be referred to as a voltage booster circuit/ASIC or similar.

The input device 100 may further comprise a control circuit 106 electrically coupled to each haptic element in the plurality of haptic elements and to each driving circuit in the plurality of driving circuits and configured to: detect at least one object on the touch surface using the plurality of haptic elements; and provide a plurality of independent haptic effects using the plurality of driving circuits and the plurality of haptic element groups, wherein the plurality of independent haptic effects at least partially overlap in time.

The plurality of independent haptic effects at least partially overlap in time when at least two of the plurality of independent haptic effects at least partially overlap in time.

The input device 100 can be used to, for example, provide a larger input area in laptop computers. Further, the input device 100 can enable, for example, providing a plurality of independent haptic effects to, for example, a plurality of fingers.

The control circuit 106 may comprise at least one processor. The at least one processor may comprise, for example, one or more of various processing devices, such as a co-processor, a microprocessor, a control circuit 106, a digital signal processor (DSP), a processing circuitry with or without an accompanying DSP, or various other processing devices including integrated circuits such as, for example, an application specific integrated circuit (ASIC), a field programmable gate array (FPGA), a microprocessor unit (MCU), a hardware accelerator, a special-purpose computer chip, or the like.

The control circuit 106 may further comprise a memory. The memory may be configured to store, for example, computer programs and the like. The memory may comprise one or more volatile memory devices, one or more non-volatile memory devices, and/or a combination of one or more volatile memory devices and non-volatile memory devices. For example, the memory may be embodied as magnetic storage devices (such as hard disk drives, floppy disks, magnetic tapes, etc.), optical magnetic storage devices, and semiconductor memories (such as mask ROM, PROM (programmable ROM), EPROM (erasable PROM), flash ROM, RAM (random access memory), etc.).

When the control circuit 106 is configured to implement some functionality, some component and/or components of the control circuit 106, such as the at least one processor and/or the memory, may be configured to implement this functionality. Furthermore, when the at least one processor is configured to implement some functionality, this functionality may be implemented using program code comprised, for example, in the memory.

Fig. 2 illustrates a schematic representation of object on a touch surface of the input device according to an embodiment.

According to an embodiment, the at least one object 202 on the touch surface 201 comprises a plurality of objects and the plurality of independent haptic effects are configured to provide an independent haptic effect for each object in the plurality of objects.

For example, in the embodiment of Fig. 2, the device 100 comprises a touch surface 201 and the plurality of haptic elements are mechanically coupled to the touch surface 201. Each haptic element in the plurality of haptic elements may be configured to convert a force applied to the haptic element via the touch surface 201 into an electrical signal. The control circuit 106 may be configured to detect the electrical signals.

The touch surface 201 may also be referred to as a layer, a surface layer, a touch interface surface, a touch interface layer, or similar. The touch surface 201 may be part of a touch user interface. The touch surface 201 may be, for example, a part of a trackpad or a key/button of a laptop computer or a touch screen.

The touch surface 201 may comprise a first side 251 and a second side 252. The first side 251 may be at least partially unobstructed. A user may touch the first side 251 with an object 202, such as a finger. The object 202 may be, for example, a finger of a user, any other body part of a human, a stylus pen, or some other object held by a user. In the case that the object 202 is a finger, the user may be wearing gloves, and only the fabric of the glove may be in direct contact with the touch surface 202.

The plurality of haptic elements may be arranged onto the second side 252 of the touch surface 201. The plurality of haptic elements may be next to the second side 252, in a close proximity to the second side 252 or situated at a distance from the second side 252. Each haptic element in the plurality of haptic elements may be configured to convert a mechanical stress in the haptic element induced by a force exerted onto the first side 251 of the touch surface 201 by an object 202 into a voltage. The mechanical stress may also be referred to as stress. The voltage may be referred to as electrical voltage, a stress induced voltage, or similar. The voltage may be proportional to the mechanical stress.

Herein, two elements being mechanically coupled may indicate that there is a mechanical connection between the two elements. The two elements may be, for example, in contact with each other or the mechanical connection may be implemented via other elements. For example, each haptic element in the plurality of haptic elements may be in contact with the touch surface 201 or there may be one or more other elements between the haptic element and the touch surface 201. Thus, when a force is applied to the touch surface 201 by an object 202 touching the touch surface 201, the force may be transferred to the haptic elements.

For example, in the embodiment of Fig. 2, two objects 202, such as fingers, are touching the touch surface 201. The plurality of independent haptic effects can provide an independent haptic effect for each of the two objects.

According to an embodiment, the plurality of independent haptic effects comprises at least one haptic effect for the at least one object on the touch surface and at least one audio effect provided via the plurality of haptic elements.

The at least one haptic effect may also be referred to as at least one haptic feedback, at least one haptic feedback effect, or similar.

The at least one audio effect may also be referred to as at least one sound effect or similar.

For example, in the embodiment of Fig. 2, the first haptic element group 102A can be configured to provide a haptic effect for the at least one object 202 and the second haptic element group 102B can be configured to provide the at least one audio effect.

In some embodiments, the at least one object on the touch surface comprises a plurality of objects and the plurality of independent haptic effects are configured to provide an independent haptic effect for each object in the plurality of objects and at least one audio effect provided via the plurality of haptic elements. For example, if the plurality of haptic element groups comprises at least three haptic element groups, two groups may be configured to provide an independent haptic effect for each object in the plurality of objects and a third haptic element group may be configured to provide an audio effect.

According to an embodiment, the plurality of haptic elements is arranged onto the second side 252 of the touch surface such that mechanical deformations of plurality of haptic elements make the touch surface move such that the touch surface follows the haptic elements.

In some embodiments, the plurality of haptic elements may comprise piezoelectric elements and the driving circuits may be configured to cause a converse piezoelectric effect on piezoelectric elements by generating an alternating electric field over the piezoelectric element in a bipolar fashion, that is, consecutively in both the same and the opposite direction with respect to the polarization of the piezoelectric element, to make the piezoelectric element move beyond its initial position consecutively in both directions. In other embodiments, the driving circuits may be configured to cause a converse piezoelectric effect on piezoelectric elements by generating an alternating electric field over the piezoelectric element in a unipolar fashion, that is, only in the same or the opposite direction with respect to the polarization of the piezoelectric element, to make the piezoelectric element move beyond its initial position in one direction.

The piezoelectric element can be used to locally move the touch surface inwards (towards the piezoelectric element) when the mechanical deformation in the piezoelectric element is a deflection directed away from the touch surface, and also to locally move the touch surface outwards (further from the piezoelectric element) when the mechanical deformation in the piezoelectric element is a deflection that is directed towards the touch surface. The piezoelectric element and the touch surface may be mechanically coupled such that the touch surface follows an inward movement of the piezoelectric element and/or even such that the following of the inward movement by the touch surface is caused by mechanical coupling between the touch surface and the piezoelectric element. An advantage may be that the input device may be able to directly drive the touch surface by the piezoelectric element in both directions. The mechanical coupling between the touch surface and the piezoelectric element may be implemented with, for example, an adhesive.

According to an embodiment, the control circuit 106 is further configured to perform self-diagnosis by performing: driving a first haptic element in the plurality of haptic elements using at least one driving circuit in the plurality of driving circuits; and detecting a response signal, caused by the driving the first haptic element, using a second haptic element in the plurality of haptic elements.

Using self-diagnosis, the control circuit 106 can, for example, determine the amount of crosstalk between the haptic elements. Crosstalk may refer to a haptic effect provided by one haptic element being detectable via other haptic elements, such as neighbouring haptic elements. This may also be referred to as self-diagnostic for crosstalk. This can also be performed with one haptic element by observing the aftereffects, such as the recovery movement of the touch surface after a haptic pulse, of driving the haptic element. Crosstalk can be affected by, for example, temperature changes, cracks in the touch surface 201 etc. Self-calibration can be used to, for example, compensate for mechanical manufacturing tolerances.

The self-calibration and/or self-diagnostics may be applicable for, for example, an interleaved haptic element arrangement.

According to an embodiment, the plurality of haptic elements comprises a plurality of piezoelectric elements.

A piezoelectric element may also be referred to as a piezoelectric actuator, a piezo sensor, a haptic feedback element, a tactile feedback element, a piezo actuator, a piezoelectric transducer, a piezo transducer, or similar.

In other embodiments, the plurality of haptic elements can comprise, for example, linear resonant actuators (LRA), magnetic actuators, single or multilayer piezoelectric elements, or other actuators.

Fig. 3 illustrates a schematic representation of a haptic element assembly according to an embodiment.

The haptic element assembly 300 may be part of a larger element, for example, as a haptic touch module. It should be appreciated that the example of FIG. 3 illustrates just one of a number of possible implementations for implementing a haptic element assembly 300. A variety of other possible implementations exist, as is clear to the person skilled in the art in the light of the following description of how the various parts of the haptic element assembly 300 can be dimensioned and formed. Further, a haptic element assembly 300 is only an example of implementing the plurality of haptic elements 302. In other embodiments, the plurality of haptic elements 302 may be implemented in various other ways.

The haptic element assembly 300 may further comprise a foil and/or a printed circuit board (PCB) comprising electrical tracks for electrically coupling the haptic elements 202 to electronics and providing protection to the haptic elements 202. The haptic elements 202 may be attached under the foil, for example, with an electrically conductive glue, by soldering or using any appropriate attachment solution. The haptic element assembly 300 may comprise one or more through holes 304, for example, rectangular through holes, as a space reservation for other components.

According to an embodiment, a first haptic element group 102A in the plurality of haptic element groups is arranged into a first area of the touch surface 201 and a second haptic element group 102B in the plurality of haptic element groups is arranged into a second area of the touch surface 201.

According to an embodiment, a first haptic element group 102A in the plurality of haptic element groups is arranged into a first domain of the touch surface 201 and a second haptic element group 102B in the plurality of haptic element groups is arranged into a second domain of the touch surface 201. For example, the first domain may correspond to a left side of the touch 201 and the second domain may correspond to a right side of the touch surface 201. This can enable, for example two users to use different sections of the touch surface 201 and providing separate haptic effects for the users.

According to an embodiment, the plurality haptic element groups comprises at least a first group comprising a first type of haptic elements and a second group comprising a second type of haptic elements.

The first type of haptic elements and the second type of haptic elements may provide, for example, different resolutions, different operation window, different audio characteristics etc. Thus, the use of the first type of haptic elements and the second type of haptic elements can provide, for example, improved resolution, improved operation window, improved audio characteristics etc.

According to an embodiment, the plurality of independent haptic effects comprises at least two different haptic effects provided to one object of the at least one object 202 on the touch surface 201.

According to an embodiment, the two haptic element groups 102A, 102B can be controlled by their respective control circuits 104A, 104B to provide simultaneous and independent haptic effect with respect to each other. For example, if a user touches the touch surface at a point corresponding to a haptic element belonging to the first haptic element group 102A and a haptic effect is provided with the haptic elements of the first haptic element group 102A in response to the touch, the haptic elements of the second haptic element group 102B may be controlled to provide a haptic effect that is different from that provided by the first haptic element group 102A. For example, all or some of the haptic elements of the second haptic element group 102B may be controlled to provide a smaller (or otherwise different) amount of haptic effect than what is provided with all or some of the haptic elements of the first haptic element group 102A. This may enable a solution in which different signals are simultaneously driven to the haptic element groups to affect the same finger from different directions. Further, this may enable to better imitate sharp edges and voids between keys of, for example, a virtual keyboard. Further, the user may be able to distinguish a direction without moving their finger as something may be "left" or "right" from the finger's current location as a result of the haptic effect provided to the user.

In some embodiments, a depth effect or a spring effect can be utilized per each haptic element group simultaneously, for example, to simulate one side of the finger going deeper than the other side to emulate tilted surface going down from finger's point of view. In the depth effect, feedback pulses may be given with an increasing rate with an increasing pressure. The spring effect may be provided by giving haptic pulses according to the physical model of spring.

The temporal relation of driving the first and second haptic element groups 102A, 102B can be varied, either fully separate in time, or in a phase-shifted manner. For example, the haptic effect provided by the haptic elements of the first and second haptic element groups 102A, 102B may be temporally alternated between the haptic elements of the first and second haptic element groups 102A, 102B. This may thus enable, for example, a pulsating alert to be provided to the user.

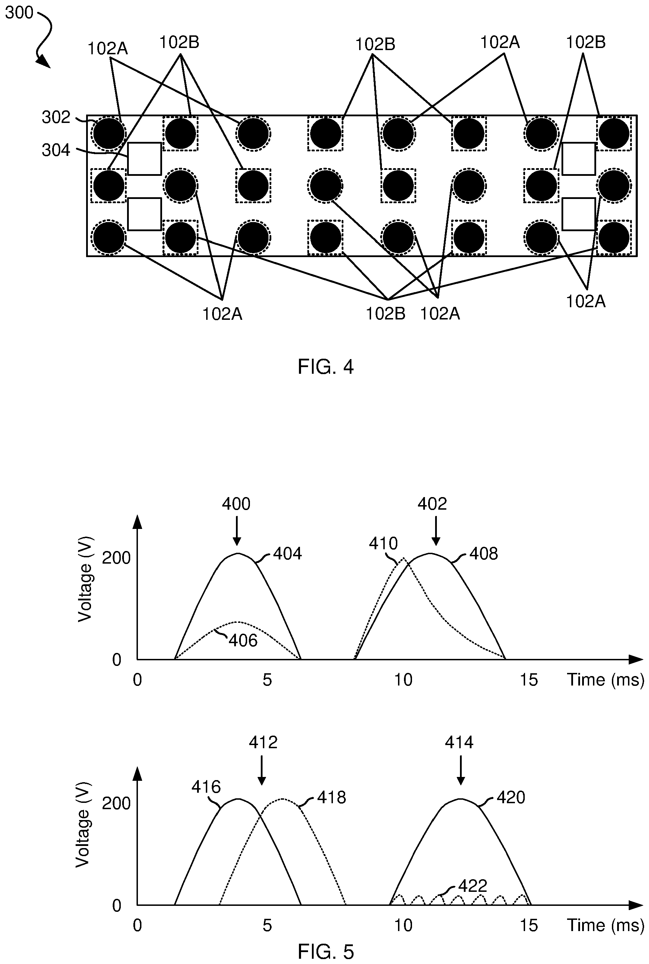

Fig. 4 illustrates a schematic representation of a haptic element assembly according to another embodiment.

According to an embodiment, the plurality of haptic elements is geometrically arranged in such a way that each haptic element in the first haptic element group 102A that is not at an edge of the plurality of haptic elements is neighboured by at least one haptic element in the second haptic element group 102B.

For example, in the embodiment of Fig. 4, each haptic element in the first haptic element group 102A that is not at an edge of the plurality of haptic elements is neighboured by four haptic elements in the second haptic element group 102B. This may be referred to as an interleaved pattern.

According to an embodiment, the first haptic element group 102A and the second haptic element group 102B are geometrically arranged in an alternating pattern. The pattern may be alternating in one or more directions.

For example, in the embodiment of Fig. 3, the first haptic element group 102A and the second haptic element group 102B alternate in one direction and, in the embodiment of Fig. 4, the first haptic element group 102A and the second haptic element group 102B alternate in two directions.

In the embodiment of Fig. 4, for each haptic element in the plurality of haptic elements, every neighbouring haptic element is in a different group. Thus, for each haptic element in the first haptic element group 102A, every neighbouring haptic element is in the second haptic element group 102B and, for each haptic element in the second haptic element group 102B, every neighbouring haptic element is in the first haptic element group 102A.

It should be appreciated that even though, in the embodiments disclosed herein, the plurality of haptic elements may be illustrated only for a limited number of haptic elements, the plurality of haptic elements may comprise any number of haptic elements. Further, arrangement of the first 102A and second haptic element group 102B may be generalised for any number of haptic elements by repeating the arrangement in an appropriate manner. For example, the arrangement illustrated in the embodiment of Fig. 4 may be generalised for any number of haptic elements.

Although some embodiment disclosed herein may illustrate the plurality of haptic elements in a matrix/array formation, these embodiments are only exemplary. The plurality of haptic elements may be geometrically arranged in any pattern. For example, if the plurality of haptic elements is used for a keyboard, each haptic element may correspond to a key of the keyboard.

According to an embodiment, the touch surface comprises at least a trackpad area and at least one wrist rest area of a laptop computer.

Herein, a trackpad area of a laptop computer may refer to an area of a laptop computer where the trackpad is traditionally located. Similarly, the at least one wrist rest area may refer to areas beside the trackpad area. The wrist rest area may also be referred to as a palm rest area or similar.

According to an embodiment, at least a first haptic element group in the plurality of haptic element groups is arranged at least to the trackpad area and at least a second haptic element group in the plurality of haptic element groups is arranged at least to the at least one wrist rest area.

For example, there may be at least one haptic element of the first haptic element group 102A in the trackpad area and at least one haptic element of the second haptic element group 102B in the wrist rest area. The other haptic element in the first 102A and second haptic element group 102B may be arranged to any other area.

Fig. 5 illustrates a plot representation of driving signals according to an embodiment.

The embodiment of Fig. 5 illustrates various examples of driving signals. The first driving circuit can provide the first driving signals 404, 408, 416, 420 to the first haptic element group 102A and the second driving circuit can provide the second driving signals 406, 410, 418, 422 to the second haptic element group 102B.

In a first example 400, a first driving signal 404 has a different amplitude than a second driving signal 406. Thus, the first haptic element group 102A and the second haptic element group 102B can both provide haptic effects of different amplitudes.

In a second example 402, a first driving signal 408 has a different shape than a second driving signal 410. Thus, the first haptic element group 102A and the second haptic element group 102B can both provide different types of haptic effects.

In a third example 412, a first driving signal 416 has a different phase than a second driving signal 418. Thus, the first haptic element group 102A and the second haptic element group 102B can both provide haptic effects with different phases.

In a fourth example 414, a first driving signal 420 provides haptic effect and a second driving signal 422 provides an audio effect. Thus, the first haptic element group 102A can provide a haptic effect and the second haptic element group can provide an audio effect 102B.

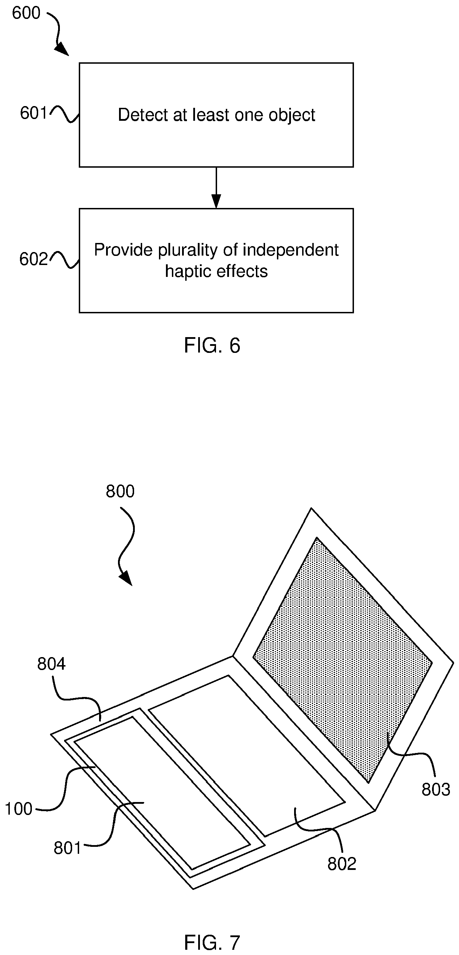

Fig. 6 illustrates a flow chart representation of a method according to an embodiment.

According to an embodiment, a method 600 for providing haptic effects with an input device comprising a plurality of haptic elements comprising a plurality of haptic element groups, a touch surface mechanically coupled to the plurality of haptic elements, and a plurality of driving circuits, wherein each driving circuit in the plurality of driving circuits is configured to drive a corresponding haptic element group in the plurality of haptic element groups for providing a haptic effect via the touch surface, comprises: detecting 601 at least one object on the touch surface using the plurality of haptic elements; and providing 602 a plurality of independent haptic effects using the plurality of driving circuits and the plurality of haptic element groups, wherein the plurality of independent haptic effects at least partially overlap in time.

Fig. 7 illustrates a schematic representation of a laptop computer according to an embodiment.

The laptop computer 800 may comprise a touch interface 801. The laptop computer 800 may further comprise a keyboard 802, a screen 803, and a chassis 804. The laptop computer 800 may further comprise various other components not depicted in the embodiment of Fig. 7.

According to an embodiment, a laptop computer comprises the input device 100.

For example, the input device 100 may be used to implement the touch-interface 801 of the laptop computer 800. The touch-interface 801 may also be referred to as a touchpad or similar. A user may operate the laptop computer 800 using the touch-interface 801. The input device 100 can provide haptic effects to the user. The input device 100 may be controlled by the laptop computer 800. For example, when a user clicks on an icon on the computer 800 using the touch-interface 801, the input device 100 can provide a haptic effect to the user in response. The haptic effect can be controlled by, for example, the operating system of the laptop computer 800.

The laptop computer 800 may comprise a processor. The laptop computer 800 may further comprise a memory. For example, the control circuit 106 may be electrically coupled to the laptop computer 800 and the processor of the laptop computer 800 can control the control circuit 106 according to program code executed on the processor.

The memory may comprise program code, such as drivers, that cause the laptop computer 800 to interface with the input device 100 when the program code is executed on the processor. Interfacing with the input device 100 may comprise, for example, transmitting signals that cause the plurality of haptic elements in the input device 100 to provide a haptic effect to the user and/or receiving signals from the input device 100 that correspond to a user touching the touch surface of the input device 100.

The input device 100 can, for example, enable the whole palm rest of the laptop computer to be made capable of sensing and/or haptics.

The haptic elements may need to have a dense enough positioning. For example, neighbouring haptic elements may need to have some crosstalk for example >10% of signal level. For example, 8 x 3 = 24 haptic elements may be sufficient for a 13" laptop if the input device 100 is implemented for the touchpad area of the laptop.

For example, using the input device 100, two cursors can be implemented for a computing device with two displays. There may be one cursor per each display.

The input device 100 can enable, for example, two people to use the same computer, such as a laptop computer, using one trackpad. For example, each person can use one side of the trackpad. This can enable the persons to, for example, play games against each other on the computer.

In some embodiments, the input device 100 can be used to, for example, implement two keyboards using a single laptop computer.

In some embodiments, the input device 100 can be used to provide at least one haptic effect for the at least one object on the touch surface and at least one audio effect provided via the plurality of haptic elements.

In some embodiments, the trackpad are of the laptop computer may be used to control a mouse cursor. Some other information may be provided to the user using the haptic elements arranged in wrist rest areas. For example, haptic effects provided via the wrist rest areas may be used to signal a misspelling while the user is typing. Alternatively or additionally, the positions of the wrists of the user can be obtained using the haptic elements.

In other embodiments, the input device 100 can be used to implement various other functionality in other devices, such as musical instrument, mixer tables etc.

In some embodiments, the input device 100 can be used to implement any combination of the functionality disclosed herein.

Although some embodiments may be disclosed herein using a laptop computer as an example, these embodiments apply in a similar fashion to any other electronic computing device, such as a smart phone, a tablet, an automotive infotainment system, or similar.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

## Claims

1. An input device (100), comprising:
a plurality of haptic elements comprising a plurality of haptic element groups (102A, 102B);
a touch surface (201) mechanically coupled to the plurality of haptic elements;
a plurality of driving circuits (104A, 104B), wherein each driving circuit in the plurality of driving circuits is configured to drive a corresponding haptic element group in the plurality of haptic element groups (102A, 102B) for providing a haptic effect via the touch surface (201); and
a control circuit (106) electrically coupled to each haptic element in the plurality of haptic elements and to each driving circuit in the plurality of driving circuits and configured to:
detect at least one object (202) on the touch surface (201) using the plurality of haptic elements; and
provide a plurality of independent haptic effects using the plurality of driving circuits and the plurality of haptic element groups, wherein the plurality of independent haptic effects at least partially overlap in time.

2. The input device (100) according to claim 1, wherein a first haptic element group (102A) in the plurality of haptic element groups is arranged into a first area of the touch surface (201) and a second haptic element group (102B) in the plurality of haptic element groups is arranged into a second area of the touch surface (201) .

3. The input device (100) according to claim 1 or claim 2, wherein the at least one object (202) on the touch surface (201) comprises a plurality of objects and the plurality of independent haptic effects are configured to provide an independent haptic effect for each object in the plurality of objects.

4. The input device (100) according to any preceding claim, wherein the plurality of independent haptic effects comprises at least one haptic effect for the at least one object on the touch surface and at least one audio effect provided via the plurality of haptic elements.

5. The input device (100) according to any preceding claim, wherein the plurality of independent haptic effects comprises at least two different haptic effects provided to one object of the at least one object on the touch surface.

6. The input device (100) according to any preceding claim, wherein the plurality haptic element groups comprises at least a first group comprising a first type of haptic elements and a second group comprising a second type of haptic elements.

7. The input device (100) according to any preceding claim, wherein the touch surface comprises at least a trackpad area and at least one wrist rest area of a laptop computer.

8. The input device (100) according to claim 7, wherein at least a first haptic element group in the plurality of haptic element groups is arranged at least to the trackpad area and at least a second haptic element group in the plurality of haptic element groups is arranged at least to the at least one wrist rest area.

9. The input device (100) according to any preceding claim, wherein the control circuit (106) is further configured to perform self-diagnosis by performing:
driving a first haptic element in the plurality of haptic elements using at least one driving circuit in the plurality of driving circuits; and
detecting a response signal, caused by the driving the first haptic element, using a second haptic element in the plurality of haptic elements.

10. The input device (100) according to any preceding claim, wherein the plurality of haptic elements comprises a plurality of piezoelectric elements.

11. A laptop computer (800) comprising the input device (100) according to any preceding claim.

12. A method (600) for providing haptic effects with an input device comprising a plurality of haptic elements comprising a plurality of haptic element groups, a touch surface mechanically coupled to the plurality of haptic elements, and a plurality of driving circuits, wherein each driving circuit in the plurality of driving circuits is configured to drive a corresponding haptic element group in the plurality of haptic element groups for providing a haptic effect via the touch surface, the method comprising:
detecting (601) at least one object on the touch surface using the plurality of haptic elements; and
providing (602) a plurality of independent haptic effects using the plurality of driving circuits and the plurality of haptic element groups, wherein the plurality of independent haptic effects at least partially overlap in time.

13. A computer program product comprising program code configured to perform the method according to claim 12, when the computer program product is executed on a computer.
